# EUROPEAN PATENT SPECIFICATION

(11) **EP 3 900 821 B1**
(45) Date of publication and mention of the grant of the patent: **29.05.2024**
(21) Application number: 21000104.6
(22) Date of filing: 15.04.2021
(51) Int. Cl.: B01J 10/00, B01J 19/00, B01J 19/08, C01B 13/11, H01T 19/04

(54) **FIXED OR MOBILE DEVICE FOR THE GASIFICATION OF PURE SUBSTANCES, HOMOGENEOUS HETEROGENEOUS AND COLLOIDAL, NATURAL OR SYNTHETIC, SYSTEMS WITH OXYGEN-OZONE MIXTURES AT DIFFERENT CONCENTRATIONS, FOR DIFFERENT TIMES, CONTROLLED TEMPERATURE AND PRESSURE WHICH LEADS TO THE FORMATION OF OZOYL, STABLE OZONIDES IN PRODUCTS OF THEIR REACTION**
FESTE ODER MOBILE VORRICHTUNG ZUR VERGASUNG VON REINSUBSTANZEN, HOMOGENEN HETEROGENEN UND KOLLOIDALEN, NATÜRLICHEN ODER SYNTHETISCHEN SYSTEMEN MIT SAUERSTOFF-OZON-MISCHUNGEN IN UNTERSCHIEDLICHEN KONZENTRATIONEN, FÜR UNTERSCHIEDLICHE ZEITEN, KONTROLLIERTE TEMPERATUR UND DRUCK, DIE ZUR BILDUNG VON OZOYL-STABILEN OZONIDEN IN DEREN REAKTIONSPRODUKTEN FÜHRT
DISPOSITIF FIXE OU MOBILE POUR LA GAZÉIFICATION DE SUBSTANCES PURES, SYSTÈMES HOMOGÈNES, HÉTÉROGÈNES ET COLLOÏDES, NATURELS OU SYNTHÉTIQUES AVEC DES MÉLANGES À L'OXYGÈNE-OZONE À DES CONCENTRATIONS DIFFÉRENTES, POUR DES DURÉES DIFFÉRENTES, À UNE TEMPÉRATURE CONTRÔLÉE ET À UNE PRESSION QUI CONDUIT À LA FORMATION D'OZOYL, OZONIDES STABLES DANS DES PRODUITS DE RÉACTION

(30) Priority: 20.04.2020 IT 202000001738 U
(43) Date of publication of application: 27.10.2021
(73) Proprietor: Erbagil S.r.l., 82037 Telese Terme (BN) (IT)
(72) Inventor: Benevento, Gilda, 82037 Telese Terme(BN) (IT)
(74) Representative: Russo, Dimitri

(56) References cited:
- EP-A2- 1 979 086
- IT-A1- MI20 111 045
- US-B1- 6 423 853
- SILVERMAN JULIAN R. ET AL: "Intensified ozonolysis of lignins in a spray reactor: insights into product yields and lignin structure", REACTION CHEMISTRY & ENGINEERING, [Online] vol. 4, no. 8, 2 January 2019 (2019-01-02) , pages 1421-1430, XP055835658, DOI: 10.1039/C9RE00098D internet Retrieved from the Internet: URL:http://pubs.rsc.org/en/content/article pdf/2019/RE/C9RE00098D> [retrieved on 2021-08-27]

## Description

The object of the present invention concerns a fixed or mobile device for gasifying pure substances, homogeneous systems, such as oily matrix from olive and other natural or synthetic oils, natural or synthetic, heterogeneous and colloidal systems, with oxygen-ozone mixtures at different concentrations, for different times, controlled temperature and pressure resulting in the formation of ozonides stable in their reaction products, such as for example OZOILE^{®}, and ozonides which are stable in combination with surfactants, emulsifiers and solubilizers, lipids, rheological additives, humectants, antioxidants and sequestering agents, preservatives and antimicrobials, auxiliaries and functional substances for manufacturing formulated products, OZOILE^{®} and stable ozonides and/or their formulated products with adsorbent support (e.g. alginates etc.) for nebulization and/or impregnation.

The present invention can be used for plants, animals and humans and particularly in the cosmetic, pharmaceutical, advanced medications, veterinary, horticultural, forestry, food, wine, agricultural, chemical and textile sectors.

Devices for ozonizing olive oil are known in the cosmetic and pharmaceutical fields, which carry out gasification processes of ozonated oils, whether saturated or not, gasified with an oxygen-ozone mixture for different times and at a controlled temperature.

See for example the utility model registration no. 0000278374 entitled: *"Device for gasifying an oily matrix from olive or from other natural or synthetic oils with an oxygen-ozone mixture for different times at a controlled temperature",* which describes a device partly similar to the one object of the present application, but lacking some peculiarities such as, for example, the fact that the oxygen-ozone mixture is bubbled by means of a mechanical mixing blade with stainless steel candles, in the reactor 5, under temperature and pressure control, where a substance which can be pure or a mixture which can be homogeneous, heterogeneous or colloidal, natural or synthetic, is present.

There are also known devices which implement gasification processes such as for example the one described in US patent 6423853 in which an apparatus for the production of ozonide comprising rn ozone generator, a multistage distillation column, a gas supply (oxygen), a feed pump, and also the patent EP 1979086 which describes an apparatus of ozonolysis on a laboratory scale comprising: a liquid tank, a feed pump, a reactor and a means for regulating the pressure, a control unit, a source of ozone.

None of the documents of the aforementioned prior art reveal or suggest, however, a combination of the characteristics as claimed in claim 1 of the present invention.

Object of the present invention is, therefore, to provide an improved device with respect to the ones offered in the prior art, which is capable of providing greater efficiency.

A further object of the present invention is to provide a fixed or mobile device for gasifying pure substances, homogeneous systems such as oily matrix from oil or from other natural or synthetic oils, natural or synthetic, heterogeneous and colloidal systems, with oxygen-ozone mixtures at different concentrations, for different times, controlled temperature and pressure resulting in the formation of OZOILE^{®}, ozonides stable in their reaction products, OZOILE^{®} and stable ozonides in combination with surfactants, emulsifiers and solubilizers, lipids, rheological additives, humectants, antioxidants and sequestering agents, preservatives and antimicrobials, auxiliaries and functional substances for manufacturing formulated products, OZOILE^{®} and stable ozonides and/or their formulated products with adsorbent support (e.g. alginates etc.) for nebulization and/or impregnation.

Further features and advantages of the present patent application will be more apparent from the detailed description of an embodiment, which is preferred though not exclusive of the fixed or mobile device for gasifying pure substances, natural or synthetic, homogeneous heterogeneous and colloidal systems, with oxygen-ozone mixtures at different concentrations, for different times, controlled temperature and pressure of this model, described by way of nonlimiting example with the aid of the appended drawing, which illustrates:

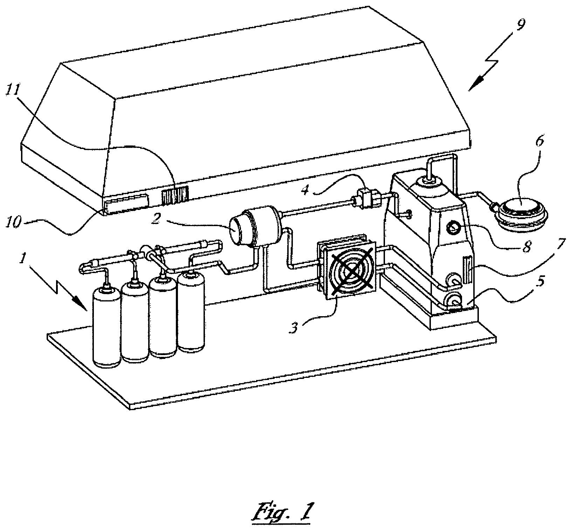

Fig. 1 an overview of the fixed or mobile device for gasifying pure substances.

The device represented in the appended drawing is fully automated and all the elements are interconnected. A PLC management device with control display and its related software involve a redundancy on the security and emergency system. The device is equipped with an interface for connecting to the supervisory network and will therefore be accessible remotely or via web connection. All the elements suitable for this purpose, including the instrumentation to control involved physical quantities such as, for example, temperature and pressure, will be easily controllable.

The device comprises an oxygen source 1 which can derive from a pure oxygen cylinder or, alternatively, the oxygen can be taken directly from the atmosphere, a generator 2 in turn comprising an ozonation cell suitable for generating ozone from oxygen by means of an electric discharge, controlled by a variable potentiometer and produced by electrodes and an electrical control and command panel of the ozonation cell.

A reactor 5 containing a matrix consisting of pure substances and/or homogeneous and/or heterogeneous or colloidal systems, into which the generated oxygen-ozone mixture will be bubbled, by means of a mixing blade with applied stainless steel candles with 0.1 micron meshes for parceling the oxygen-ozone mixture, under control of the reaction temperature at 35° C ± 5 and pressure of 0.5 bar ± 0.1.

A refrigerator 3 using a mixture composed of 70% water and 30% propylene glycol is connected through a closed circuit to the generator 2 and to the reactor 5 at a temperature adjustable from 0° C to 40° C.

A fitting connects the oxygen source 1 to the ozone generator 2, from this to the ozone analyzer 4 and from the latter to the reactor 5 for the oxygen-ozone path. Said fitting also connects the cooling water path from the refrigerator 3 to the ozone generator 2 and vice versa, and to the reactor 5 and vice versa.

The operation of such device involves an initial step in which gaseous oxygen is delivered at a predefined pressure into the ozone generator. Within said generator, based on the desired concentration, a part of the oxygen is transformed into ozone. Lastly, the oxygen-ozone mixture is bubbled by means of a mechanical mixing blade equipped with stainless steel candles, in the reactor 5, under temperature and pressure control, where a substance which can be pure or a mixture which can be homogeneous, heterogeneous or colloidal, natural or synthetic is present.

Among the process parameters deemed important in the operation of such device are:
- the power of the electric discharge and the oxygen flow rate as far as the production of different ozone concentrations is concerned;
- the different ozone concentrations allow to obtain stable ozonides in their reaction products once bubbled in different substances or systems contained in the reactor (pure substances, homogeneous, heterogeneous or colloidal systems);
- the reaction temperature which influences the stability of the ozone and of the reaction products;
- the pressure during the gasifying process which, if accurately selected, allows to maintain the reaction products which are formed in the reactor 5 stable over time.

As previously mentioned, the formation of stable ozonides in their reaction products is achieved by the mobile or fixed device manufactured in models which differ for their ability to produce the oxygen-ozone mixture at different concentrations and bubbled in the reactor for different times, controlled temperature and pressure, containing pure substances, natural or synthetic, homogeneous, heterogeneous and colloidal, systems.

Peculiar feature of the device object of the present patent is the combination of stable ozonides in their reaction products with vitamin E acetate.

The gasifying device according to the present patent application also comprises gas absorption cells 6, a probe holder and thermometer 7 attached to the reactor 5, a pressure gauge 8 and a suction hood 9.

The suction hood 9 involves an ozone detector 10 and an audible alarm 11.

Although the object has been described with particular reference to the appended figure, the reference numbers used in the description and in the claims are used to improve the intelligence of the patent application and do not constitute any limitation to the scope of the claim.

## Claims

1. Fixed or mobile device for gasifying pure substances, natural or synthetic, homogeneous heterogeneous and colloidal systems, with oxygen-ozone mixtures at different concentrations, for different times, controlled temperature and pressure resulting in the formation of ozonides stable in their reaction products, comprising an oxygen source (1) which can derive from a pure oxygen cylinder, an ozone generator (2), in turn comprising an ozonation cell suitable for generating ozone from oxygen by means of an electric discharge, controlled by a variable potentiometer and produced by electrodes and an electrical control and command panel of the ozonation cell, a reactor (5) containing a matrix consisting of pure substances and/or homogeneous and/or heterogeneous or colloidal systems into which the generated oxygen-ozone mixture will be bubbled, by means of a mixing blade with applied stainless steel candles with 0.1 micron meshes for parceling the oxygen-ozone mixture, and suitable to be used under control of the reaction temperature at 35° C ± 5 and pressure of 0.5 bar ± 0.1, a refrigerator (3) suitable for using a mixture composed by 70% water and 30% propylene glycol and connected through a closed circuit to the generator (2) and to the reactor (5) suitable to be used at an adjustable temperature from 0°C to 40°C, a fitting connecting the oxygen source (1) to the ozone generator (2), from this to an ozone analyzer (4) and from the latter to the reactor (5) for the oxygen-ozone path said fitting being also suitable for connecting the cooling water path, from the refrigerator (3) to the ozone generator (2) and vice versa, and to the reactor (5) and vice versa.

## Patentansprüche

1. Feststehende oder mobile Vorrichtung zur Vergasung von Reinsubstanzen, natürlichen oder synthetischen, homogenen, heterogenen und kolloidalen Systemen mit Sauerstoff-Ozon-Gemischen in unterschiedlichen Konzentrationen, über unterschiedliche Zeiträume, bei gesteuerter Temperatur und gesteuertem Druck, was zur Bildung von Ozoniden führt, die in ihren Reaktionsprodukten stabil sind, umfassend eine Sauerstoffquelle (1), die von einer Reinsauerstoffflasche stammen kann, einen Ozongenerator (2), der wiederum eine Ozonisierungszelle umfasst, die zur Erzeugung von Ozon aus Sauerstoff mittels einer elektrischen Entladung geeignet ist, die durch ein variables Potentiometer gesteuert und durch Elektroden und ein elektrisches Steuer- und Befehlsfeld der Ozonisierungszelle produziert wird, einen Reaktor (5), der eine Matrix enthält, die aus Reinsubstanzen und/oder homogenen und/oder heterogenen oder kolloidalen Systemen besteht, in die das erzeugte Sauerstoff-Ozon-Gemisch mittels eines Mischflügels mit aufgesetzten Edelstahlkerzen mit 0,1 Mikrometer Maschenweite zur Parzellierung des Sauerstoff-Ozon-Gemisches gesprudelt wird, und der zur Verwendung unter Steuerung der Reaktionstemperatur bei 35 °C ± 5 und des Drucks bei 0,5 bar ± 0,1 geeignet ist, ein Kühlgerät (3), das zur Verwendung eines Gemisches, das aus 70 % Wasser und 30 % Propylenglykol besteht, geeignet ist und über einen geschlossenen Kreislauf
mit dem Generator (2) und dem Reaktor (5) verbunden ist und zur Verwendung bei einer einstellbaren Temperatur zwischen 0 °C und 40 °C geeignet ist, ein Anschlussstück, das die Sauerstoffquelle (1) mit dem
Ozongenerator (2), von dort mit einem Ozonanalysegerät (4) und von Letzterem mit dem Reaktor (5) für den Sauerstoff-Ozon-Weg verbindet, wobei das Anschlussstück auch dazu geeignet ist, den Kühlwasserweg von dem Kühlgerät (3) zu dem Ozongenerator (2) und umgekehrt und zu dem Reaktor (5) und umgekehrt zu verbinden.

## Revendications

1. Dispositif fixe ou mobile pour gazéifier des substances pures, des systèmes naturels ou synthétiques, homogènes, hétérogènes et colloïdaux, avec des mélanges oxygène-ozone à des concentrations différentes, pour des temps différents, une température et une pression contrôlées entraînant la formation d'ozonides stables dans leurs produits de réaction, comprenant une source d'oxygène (1) qui peut dériver d'une bouteille d'oxygène pur, un générateur d'ozone (2), comprenant lui-même une cellule d'ozonation appropriée pour générer de l'ozone à partir de l'oxygène au moyen d'une décharge électrique, contrôlé par un potentiomètre variable et produit par des électrodes et un panneau de commande et de contrôle électrique de la cellule d'ozonation, un réacteur (5) contenant une matrice constituée de substances pures et/ou de systèmes homogènes et/ou hétérogènes ou colloïdaux dans lesquels le mélange oxygène-ozone généré sera bullé, au moyen d'une lame de mélange avec des bougies en acier inoxydable appliquées avec des mailles de 0,1 micron pour répartir le mélange oxygène-ozone, et adapté pour être utilisé sous contrôle de la température de réaction à 35 °C ± 5 et une pression de 0,5 bar ±0,1, un réfrigérateur (3) adapté à l'utilisation d'un mélange composé de 70 % d'eau et 30 % de propylène glycol et relié par un circuit fermé
au générateur (2) et au réacteur (5) adapté pour être utilisé à une température réglable de 0 °C à 40 °C, un raccord reliant la source d'oxygène (1) au
générateur d'ozone (2), de celui-ci à un analyseur d'ozone (4) et de ce dernier au réacteur (5) pour le circuit oxygène-ozone, ledit raccord étant également adapté pour relier le circuit d'eau de refroidissement, du réfrigérateur (3) au générateur d'ozone (2) et vice versa, et au réacteur (5) et vice versa.
